# EUROPÄISCHE PATENTANMELDUNG

(11) **EP 0 805 549 A1**
(43) Veröffentlichungstag der Anmeldung: **05.11.1997**
(21) Anmeldenummer: 97103696.7
(22) Anmeldetag: 06.03.1997
(51) Int. Cl.: H02P 5/17, H02M 7/527

(54) **Schaltungsanordnung zum Betreiben eines Elektromotors**

(30) Priorität: 04.05.1996 DE 19617947
(71) Anmelder: Braun Aktiengesellschaft, Frankfurt am Main (DE)
(72) Erfinder: Bauer, Alfred, 63263 Neu-Isenburg (DE)

(57) **Zusammenfassung**

Die Erfindung betrifft eine Schaltungsanordnung zum Betreiben eines Elektromotors (1), bei der zur Minimierung von Netzrückwirkungen infolge einer Steuerung bzw. Regelung der Leistungszufuhr eine Drosselspule (8) vorhanden ist und nach der Drosselspule eine Kapazität (11) quer zur Eingangsspannung geschaltet ist, wobei als Drosselspule (8) wenigstens ein Teil wenigstens einer Statorwicklung (Stator 1) des Elektromotors (1) verwendet wird.

## Beschreibung

Die vorliegende Erfindung betrifft eine Schaltungsanordnung zum Betreiben eines Elektromotors nach dem Patentanspruch 1.

Bei der Leistungszufuhr zu einem Elektromotor ist es bekannt, eine Steuerung bzw. Regelung der Leistungszufuhr zu dem Elektromotor vorzunehmen durch eine Phasenanschnittsteuerung einer Wechselspannung oder durch einen Transistorsteller. Bei letzterem wird die Schaltstrecke des Transistors in Reihe geschaltet zu dem Elektromotor. Durch eine beispielsweise pulsbreitenmodulierte Ansteuerung des Transistors wird dabei die Leistungszufuhr zu dem Elektromotor eingestellt (DE 36 43 221 A1).

Wird bei einem Transistorsteller kein Ladekondensator am Ausgang eines Netzgleichrichters verwendet, entsteht ein mit der Schaltfrequenz des Transistorstellers (in der Größenordnung von einigen kHz) getakteter Netzstrom. Bei Verwendung eines Reihenschlußmotors ist dieser zwar sinusförmig, aber die Anteile der Taktfrequenz sind dem Betrage nach zu hoch, so daß es zu Störungen kommen kann. Beispielsweise aus dem Gebiet der Schaltnetzteile ist es bekannt, an den Ausgang eines Netzgleichrichters einen Ladekondesator anzuschließen. Dann treten jedoch Netzoberwellen beträchtlicher Amplitude im Frequenzbereich von 150 bis 1.950 Hz auf. Diese Netzrückwirkungen können dadurch minimiert werden, daß weiterhin eine Drosselspule vorhanden ist und nach der Drosselspule ein Kondensator quer zur Eingangsspannung geschaltet ist (DE 41 22 544 C1). Die Drosselspule bildet mit dem Kondensator einen Tiefpaß, so daß eine geringere Kapazität verwendet werden kann. Die Drosselspule ist dabei zwischen Netzgleichrichterausgang und Kondensator geschaltet. Die Kapazität kann dabei beispielsweise durch einen Folienkondensator gebildet sein.

Erfindungsgemäß wird eine Schaltungsanordnung vorgeschlagen, bei dem als Drosselspule wenigstens ein Teil einer Statorwicklung des Elektromotors verwendet wird.

Bei nur geringfügigen Veränderungen der Drehzahl/Drehmoment-Kennlinien kann dabei bei der Schaltungsanordnung ein Bauteil, nämlich die Drosselspule, eingespart werden.

Dies erweist sich insbesondere bei der Massenfertigung von elektromotorisch betriebenen Geräten wegen der damit verbundenen Kosteneinsparung als vorteilhaft.

Bei der Schaltungsanordnung nach Anspruch 2 erweist es sich als vorteilhaft, daß die Bauteile des Elektromotors nicht verändert werden müssen.

Bei der Schaltunsganordnung nach Anspruch 3 zeigt sich vorteilhaft, daß durch das Anbringen eines weiteren Anschlusses an dem Stator die Induktivität der Drosselspule eingestellt werden kann.

Ein Ausführungsbeispiel der Erfindung ist in der Zeichnung näher beschrieben. Es zeigen dabei:
- Fig. 1: ein erstes Ausführungsbeispiel einer erfindungsgemäßen Schaltungsanordnung und
- Fig. 2: ein zweites Ausführungsbeispiel einer erfindungsgemäßen Schaltungsanordnung.

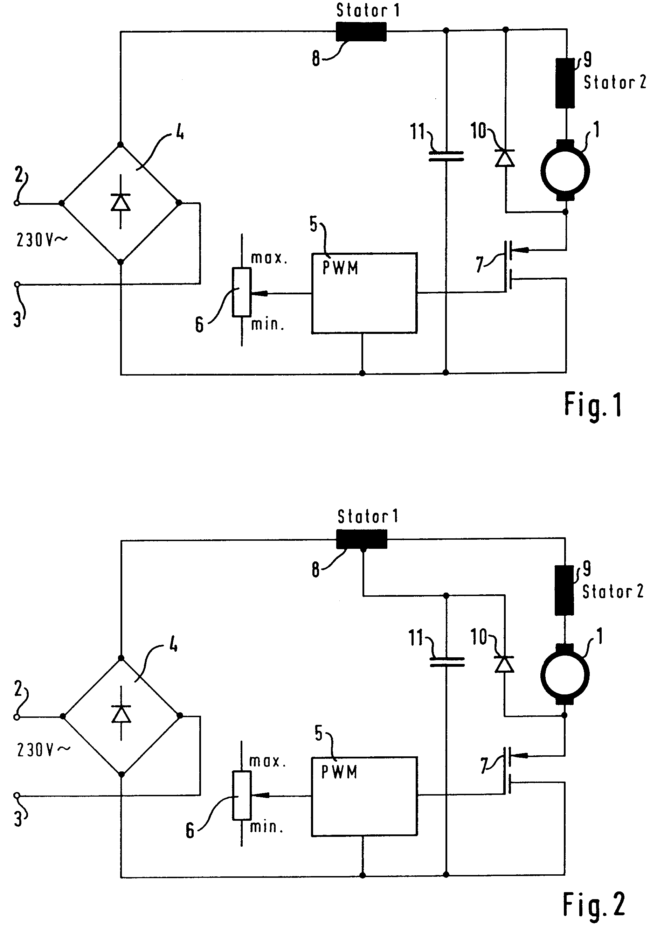

Fig. 1 zeigt eine Schaltungsanordnung zum Betreiben eines Elektromotors 1. Der Elektromotor 1 wird dabei aus einer Netzwechselspannung gespeist, die an den Klemmen 2 und 3 anliegt und mittels des Netzgleichrichters 4 gleichgerichtet wird. Die Leistungszufuhr zu dem Elektromotor 1 kann durch eine Steuer- bzw. Regeleinrichtung 5 eingestellt werden. Der Sollwert kann dabei von dem Benutzer eingestellt werden. Diese Einstellung kann über das Widerstandsverhältnis eines Potentiometers erfolgen, was durch die Bezugsziffer 6 angedeutet ist. Von der Steuer- bzw. Regeleinrichtung 5 kann dabei ein pulsbreitenmoduliertes Signal an den Steuereingang eines steuerbaren Schalters 7 angelegt werden. Dieser steuerbare Schalter 7 kann ein Transistors sein, insbesondere ein IGBT. Der Elektromotor 1 weist zwei Statoren 8 und 9 auf. Parallel zum Anker und zur zweiten Statorwicklung ist eine Freilaufdiode 10 vorhanden, die bei durchgeschaltetem steuerbaren Schalter 7 in Sperrichtung gepolt ist und bei gesperrtem steuerbaren Schalter 7 so gepolt ist, daß der in dem Elektromotor 1 fließende Strom von der Freilaufdiode übernommen wird.

Zur Minimierung von Netzrückwirkungen aufgrund des getakteten Betriebes des Elektromotors 1 ist eine Drossel vorhanden. Als Drossel wird dabei bei dem Ausführungsbeispiel der Fig. 1 ein Stator 8 des Elektromotors 1 verwendet. Dadurch kann ein Bauteil - nämlich eine zusätzliche Drosselspule - eingespart werden. Nach dem Stator 8 ist eine Kapazität 11 quer zur Eingangsspannung geschaltet.

Bei dem Ausführungsbeispiel der Fig. 2 sind gleiche Bauteile mit gleichen Bezugsziffern versehen wie bei der Fig. 1. Wie dem Ausführungsbeispiel der Fig. 2 zu entnehmen, wird hier nur ein Teil des Stators 8 als Drosselspule verwendet. Es ist dabei also möglich, durch einen entsprechenden Abgriff an dem Stator 8 einen bestimmten Wert der Induktivität der Drosselspule einzustellen.

Gegebenenfalls können auch beide Statoren verwendet werden, um die Drosselspule zu bilden.

## Patentansprüche

1. Schaltungsanordnung zum Betreiben eines Elektromotors (1), bei der zur Minimierung von Netzrückwirkungen infolge einer Steuerung bzw. Regelung der Leistungszufuhr eine Drosselspule (8) vorhanden ist und nach der Drosselspule (8) eine Kapazität (11) quer zur Eingangsspannung geschaltet ist,
dadurch gekennzeichnet,
daß als Drosselspule (8) wenigstens ein Teil wenigstens einer Statorwicklung (8, 9) des Elektromotors (1) verwendet wird.

2. Schaltungsanordnung nach Anspruch 1,
dadurch gekennzeichnet,
daß genau eine Statorwicklung (8) verwendet wird.

3. Schaltungsanordnung nach Anspruch 1,
dadurch gekennzeichnet,
daß ein Teil einer Statorwicklung (8) verwendet wird.
